# FASCICULE DE BREVET EUROPEEN

(11) **EP 2 482 402 B1**
(45) Date de publication et mention de la délivrance du brevet: **27.04.2016**
(21) Numéro de dépôt: 12153476.2
(22) Date de dépôt: 01.02.2012
(51) Int. Cl.: H02G 3/06, H02G 3/32, F16B 5/06

(54) **Dispositif pour l'assemblage de deux éléments**
Vorrichtung zum Zusammenbau von zwei Elementen
Device for the assembly of two elements

(30) Priorité: 01.02.2011 FR 1100306
(43) Date de publication de la demande: 01.08.2012
(73) Titulaire: Niedax France, 62400 Béthune (FR)
(72) Inventeur: Rousselle, Denis, 62400 Bethune (FR); Delforge, David, 62400 Bethune (FR); Penichon, Mickaël, 62400 Bethune (FR)
(74) Mandataire: Demulsant, Xavier

(56) Documents cités:
- WO-A1-2008/028646
- FR-A- 1 574 183
- FR-A1- 2 768 472
- FR-A1- 2 785 339

## Description

L'invention a trait au domaine des dispositifs pour l'assemblage de deux éléments de type plaque, et plus précisément pour l'assemblage dans le domaine des chemins de câbles.

Un chemin de câbles est une structure permettant de supporter, aussi bien dans une configuration verticale qu'horizontale, notamment des câbles électriques, des câbles téléphoniques, des câbles de fibres optiques, des câbles de réseau informatique ou encore des canalisations. De préférence, les chemins de câbles sont réalisés en métal, tels que l'acier inoxydable ou l'aluminium, mais ils peuvent être réalisés dans toute autre matière, notamment en matière plastique.

Les chemins de câbles peuvent être en treillis de fil, c'est-à-dire former de fils longitudinaux, appelés fils de chaîne, croisés et soudés avec des fils transversaux, appelés fils de trame. On trouve également des chemins de câbles en tôle, perforée ou non perforée, obtenue par pliage d'une feuille métallique pleine, puis, le cas échéant, par découpage de la feuille. Les chemins de câbles peuvent subir un traitement ultérieur, dépendamment de l'environnement dans lequel ils sont destinés à être placés. Ainsi, les chemins de câbles métalliques peuvent subir une galvanisation, un zingage, être plastifié ou encore être revêtus d'une couche d'époxy.

Un chemin de câbles comporte généralement plusieurs tronçons droits, d'une longueur conventionnellement de trois mètres, aboutés les uns aux autres selon la trajectoire à suivre. Des tronçons dits coudés permettent la jonction entre deux tronçons droits formant un angle.

Les tronçons présentent un fond et deux ailes latérales s'élevant sensiblement perpendiculairement au fond, de sorte que la section forme un U. On connaît toutefois des tronçons de sections de forme différente, telle qu'une section en G décrite dans le document WO 2007/068813, une section en C ou encore une section en Oméga.

Les tronçons aboutés sont assemblés les uns aux autres par exemple au moyen de pièces appelées éclisses, montées à cheval sur deux tronçons. Chaque éclisse est montée sur les ailes ou sur le fond de deux tronçons aboutés. L'éclisse est bloquée au moyen de visserie, ou encore par soudage. Il a en outre été développé des éclisses pouvant se monter à force, évitant l'emploi d'outillage supplémentaire, comme décrites par exemple dans les documents FR 2 751 723, FR 2 833 420, FR 2 937 399 et FR 2 937 400.

Les câbles sont placés sur le fond des tronçons, et un couvercle peut venir fermer le chemin de câbles, afin d'empêcher l'intrusion dans le chemin de câbles d'éléments étrangers, tels que des particules de poussière, pouvant nuire aux câbles, ou encore pour empêcher un accès malveillant au câbles.

Des cornières de séparation peuvent être fixées sur le fond des tronçons, s'élevant sensiblement à angle droit par rapport au fond, de façon à créer des compartiments pour séparer physiquement les câbles dans le chemin de câbles. Une telle séparation est avantageuse notamment lorsque les câbles sont de natures différentes.

Des colliers peuvent de plus être montés sur le fond des tronçons de chemin de câbles afin de rassembler plusieurs câbles et les maintenir contre le fond des tronçons.

FR2768472 divulgue un dispositif pour l'assemblage de deux éléments), le dispositif définissant un axe de référence comprenant deux bras élastiques disposés en pétale, s'étendant depuis un bord inférieur jusqu'à un bord libre, les bras étant jointifs par leur bord inférieur. Chaque bras comprenant une portion de corps s'étendant depuis le bord inférieur jusqu'à un bord supérieur, présentant une extension axiale, et comportant une patte élastique en saillie radiale vers la direction opposée de l'axe de référence et une portion de tête s'étendant depuis le bord supérieur jusqu'au bord libre et présentant une extension radiale vers la direction opposée de l'axe de référence.

Généralemérit, les chemins de câbles sont montés au moyen de ce qui est communément appelé console de supportage, servant de support. La console comprend elle-même un bras de console fixé sur un support, tel qu'un pendard, ou toute autre structure de type colonne, ou directement sur une paroi verticale. Le bras peut être encastré, par exemple au moyen d'une soudure, dans une platine elle-même fixée au support. Le bras de console se présente généralement sous la forme d'une structure élancée, de section carrée. Afin d'alléger la structure générale et de limiter l'encombrement, les bras de console sont principalement fixés en porte-à-faux. Ainsi, par exemple lorsque le pendard est vertical, le bras de console s'étend horizontalement, et les chemins de câbles s'étendent horizontalement. En variante, le bras peut être suspendu sur un plafond, comme présenté par exemple dans les documents EP 2 091 120 et FR 2 890 147.

Un bras se présente généralement sous la forme d'un profilé, présentant une surface supérieure plane, et éventuellement munie d'ouvertures qui peuvent être oblongues.

L'installation des tronçons de chemins de câbles se fait à l'avancement, nécessitant de manipuler chaque tronçon afin de fixer le chemin de câbles sur tous les supports. La fixation doit être suffisante à la fois pour supporter la charge des tronçons et des câbles placés à l'intérieur, mais également pour supporter les contraintes dues par exemple aux mouvements sismiques du sol.

Une attention particulière est donc requise pour la fixation des tronçons sur leur support, à la fois du point de vue de la manipulation pour un opérateur, mais également d'un point de vue de la résistance aux contraintes.

Il a été proposé plusieurs solutions visant à faciliter le montage des tronçons de chemins de câbles sur leur bras de support.

Par exemple, les documents EP 1 542 329 et FR 2 857 788 proposent de former des logements dans le bras de support de manière à y insérer un fil de chaîne d'un tronçon de chemins de câbles en treillis de fil. Eventuellement, un outil peut venir bloquer le fil dans les logements par déformation du bras, comme dans le document FR 2 857 788.

Toutefois, une telle solution requiert la fabrication de bras comportant des logements, et donc sortant des standards de fabrication. Par conséquent, les coûts de fabrication s'en trouvent augmenter. Par ailleurs, lorsque des bras sont déjà installés, mais ne présentent pas les logements nécessaires, il convient de les remplacer par les bras adaptés, ce qui est long et coûteux.

On connaît par ailleurs des clips rapportés sur les tronçons pour les fixer sur les bras.

Le document FR 2 852 157 donne un exemple d'un tel clip pour le montage d'un tronçon de chemin de câbles en treillis de fil sur un bras. Le clip est de forme générale en U et comporte deux ailes dont l'extrémité est en forme de T. L'âme du clip présente une forme en V formant logement pour un fil du tronçon. Le tronçon est posé sur une face plane du bras, munie d'ouvertures. Le clip est alors monté de sorte qu'un fil du tronçon vienne au fond du logement en V, l'extrémité des ailes s'insérant dans les ouvertures du bras et prenant appui sur la face intérieure du bras.

Le document EP 1 039 198 présente un clip pour monter un tronçon de chemins de câbles en treillis de fil sur bras muni d'ouvertures oblongues. Le clip comprend deux ailes élastiques formant un V, chaque aile étant prolongée par une lamelle dont l'extrémité forme un crochet. Les ailes du clip se déforment pour être insérées dans une ouverture du bras, les lamelles plaquant le fil dans les logements contre le bras. Les ailes une fois insérées tendent à s'écarter par élasticité pour bloquer le clip sur le bras.

Bien que de tels clips assurent le montage d'un tronçon en treillis de fil, ils se révèlent inadaptés au montage de tronçons en tôle.

Le document FR 2 799 518 décrit un écrou élastique comportant un anneau et des bras, et associé une vis. Chaque bras de l'écrou est muni d'une languette en saillie vers l'axe de l'écrou. Les bras de l'écrou sont insérés dans deux ouvertures coaxiales, par exemple dans les ouvertures d'un tronçon de chemins de câbles en tôle et de son support, et la tige filetée de la vis est insérée dans l'anneau provoquant la déformation des bras. Le tronçon et le support sont alors bloqués l'un sur l'autre. Une rondelle est interposée entre la tête de la vis et l'écrou. Pour s'adapter aux treillis de fil, la rondelle comprend une patte venant bloquer un fil du treillis, l'écrou étant bloqué par ailleurs dans une ouverture du support.

L'écrou permet alors d'assembler les tronçons de chemins de câbles à la fois en tôle et en treillis de fil sur un support. Cependant, il requiert l'utilisation de visserie, ce qui augmente le nombre de pièces à manipuler et les coûts, et rend la mise en oeuvre par un opérateur fastidieuse.

Le document EP 0 725 467 propose de bloquer un tronçon de chemins de câbles en tôle perforée au moyen d'une clé de verrouillage. La clé présente un corps allongé, et des moyens de fixation en forme de bec ou de patte aux extrémités. Les deux extrémités sont introduites et bloquées chacune dans des ouvertures coaxiales du tronçon et de son support par déformation élastique du corps.

La mise en oeuvre de la clé ainsi décrite nécessite l'utilisation de deux ouvertures sur le tronçon et de deux ouvertures sur le support, à distance adaptée à la fois pour les ouvertures du tronçon coïncident avec les ouvertures du support, et pour que la distance entre les deux ouvertures du tronçon, et du support, correspondent aux dimensions de la clé. La clé ne peut donc être utilisée pour toute dimension de chemins de câbles, et plus précisément lorsque la distance entre les ouvertures d'un tronçon de chemin de câbles varie, la distance entre les ouvertures du support ainsi que les dimensions de la clé devront être adaptés en conséquence. Il est donc nécessaire de prévoir un stock de clés, de support et de tronçons dépendamment des distances, ce qui augmente les coûts.

La présente invention a notamment pour objet de pallier aux inconvénients des dispositifs d'assemblage des tronçons de chemin de câbles en tôle de l'état de la technique.

Un premier objet de l'invention est de proposer un dispositif pour l'assemblage de deux éléments simple de fabrication, pour un coût minimal.

Un deuxième objet de l'invention est de proposer un dispositif pour l'assemblage de deux éléments ne requérant pas l'utilisation d'outillage ou de visserie.

Un troisième objet de l'invention est de proposer un dispositif pour l'assemblage de deux éléments facile à manipuler et à mettre en place pour un opérateur.

Un quatrième objet de l'invention est de proposer un dispositif pour l'assemblage de deux éléments particulièrement adapté au domaine des chemins de câbles.

Un cinquième objet de l'invention est de proposer un dispositif pour l'assemblage d'un tronçon de chemins de câbles en tôle perforée avec un bras de support ou des accessoires.

Un sixième objet de l'invention est de proposer un dispositif pour l'assemblage de deux éléments s'adaptant facilement aux dimensions des tronçons et du support.

Un septième objet de l'invention est de proposer un dispositif pour l'assemblage de deux éléments fournissant une liaison entre le tronçon et le support suffisante pour résister aux contraintes que l'on trouve habituellement dans les chemins de câbles.

A cet effet, selon un premier aspect, l'invention propose un dispositif pour l'assemblage de deux éléments, le dispositif définissant un axe de référence comprenant au quatre bras élastiques disposés en pétale, s'étendant depuis un bord inférieur jusqu'à un bord libre, les bras étant jointifs par leur bord inférieur, chaque bras comprenant :
- une portion de corps s'étendant depuis le bord inférieur jusqu'à un bord supérieur, présentant une extension axiale, et comportant une patte élastique en saillie radiale vers la direction opposée de l'axe de référence, cette patte (13) présentant une extrémité (15) libre dirigée vers le bord (12) supérieur du bras (2).
- une portion de tête s'étendant depuis le bord supérieur jusqu'au bord libre et présentant une extension radiale vers la direction opposée de l'axe de référence.

Le dispositif ainsi formé, simple de fabrication, permet de bloquer deux éléments à la fois entre les portions de tête et les pattes et entre la les portions de corps des deux bras, sans outillage supplémentaire, par élasticité.

De préférence, chaque portion de tête est inclinée depuis le bord supérieur vers le bord inférieur, de sorte que la déformation de la portion de tête est plus prononcée, augmentant l'effet de blocage entré les portions de tête et les pattes.

Selon un mode de réalisation, chaque patte est formée par emboutissage de la portion de corps d'un bras.

Selon un autre mode de réalisation, chaque patte est formée par pliage de la portion de corps d'un bras suivant un bord latéral du bras.

Les deux modes de réalisation assurent la formation de pattes élastiques à moindre coût fournissant un blocage suffisant.

Avantageusement, la dimension de la portion de tête de chaque bras, mesurée suivant le bord supérieur, est inférieure à la dimension mesurée suivant le bord libre, de sorte que la plus grande dimension de la portion de tête est supérieure à celle des ouvertures dans lesquelles le dispositif est inséré. La portion de tête est alors en appui sur un premier élément selon le bord libre, les pattes étant en appui sous le deuxième élément pour assurer un blocage efficace.

De plus, selon le mode de réalisation préféré les bords inférieurs des quatre bras sont solidaires d'une base carrée, de sorte que le dispositif ne peut pas pivoter dans les perforations dans lesquelles il est inséré.

Selon un deuxième aspect, l'invention propose un chemin de câbles comprenant un tronçon et un bras de support munis chacun d'au moins une perforation, la perforation du tronçon étant coïncidente avec la perforation du bras de support, le tronçon étant assemblé sur le bras de support au moyen du dispositif décrit ci-dessus inséré dans les perforations coïncidentes.

Le chemin de câbles présente alors des performances conformes aux exigences des installations électriques pour les bâtiments industriels mais aussi pour les installations chez les particuliers.

Selon un troisième aspect, l'invention propose un chemin de câbles comprenant deux tronçons télescopiques, chaque tronçon étant muni d'au moins une perforation, la perforation d'un premier tronçon étant coïncidente avec la perforation du deuxième tronçon, le glissement relatif des tronçons étant bloqué au moyen du dispositif décrit ci-dessus inséré dans les perforations coïncidentes.

Les deux tronçons de chemins de câbles de chemin de câbles télescopiques peuvent être assemblés au moyen du dispositif de manière complémentaire à des moyens de blocage du glissement relatif des tronçons, assurant un contact intime entre les tronçons.

Les perforations peuvent être de forme oblongue ou de forme carrée, le dispositif offrant un blocage adéquat dans les deux cas sans avoir besoin de revoir sa conception.

D'autres objets et avantages de l'invention apparaîtront à la lumière de la description faite ci-après en référence aux dessins annexés dans lesquels :
- la figure 1 est une vue de face d'un dispositif pour l'assemblage de deux éléments ;
- la figure 2 est une vue de dessus du dispositif de la figure 1 ;
- la figure 3 est une vue en perspective du dispositif de la figure 1 ;
- la figure 4 est une vue de dessus du dispositif déployé de la figure 1 ;

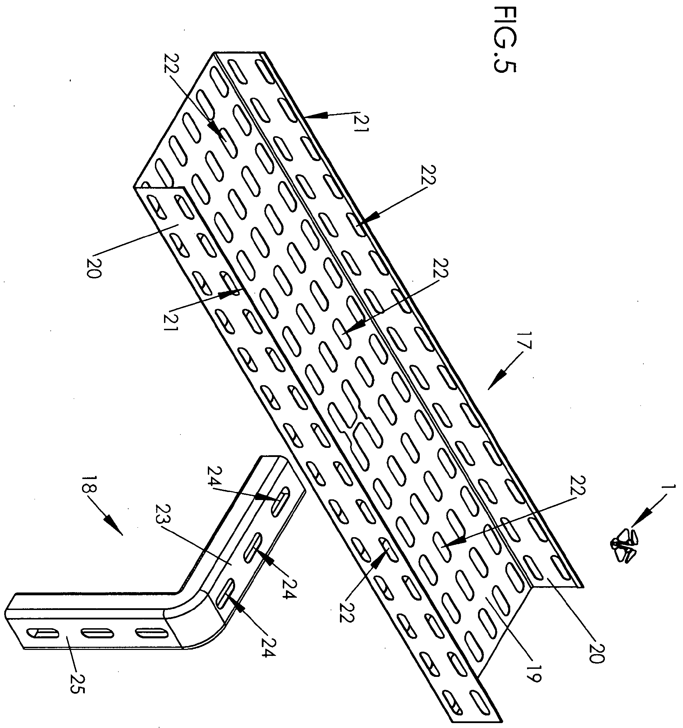

- la figure 5 est une vue en perspective d'un tronçon de chemins de câbles en tôle, d'un bras de support et du dispositif d'assemblage de la figure 1 ;

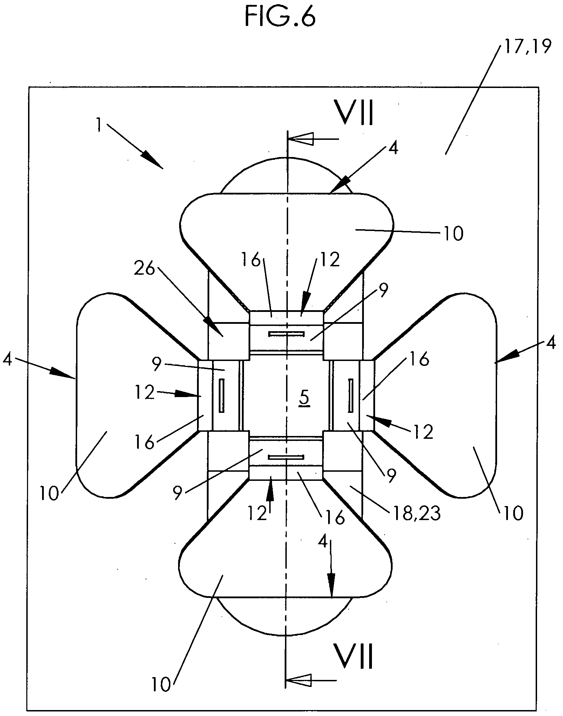

- la figure 6 est une vue de dessus du dispositif pour l'assemblage d'un des tronçons de chemins de câbles sur le bras de support de la figure 5 ;

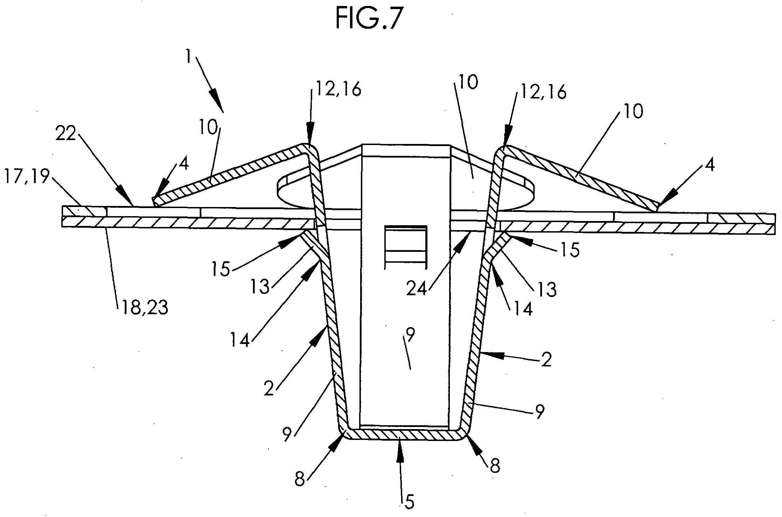

- la figure 7 est une vue en coupe du dispositif de la figure 6 selon la ligne VII-VII.

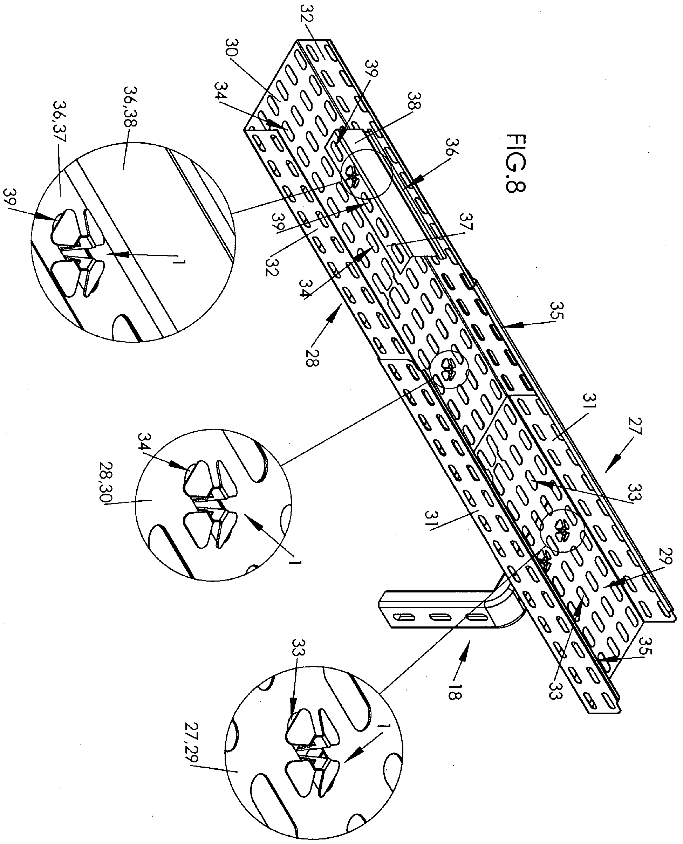

- la figure 8 est une vue en perspective d'un système comprenant deux tronçons de chemin de câbles assemblés au moyen d'un dispositif pour l'assemblage de la figure 1, une cornière assemblée sur un des tronçons assemblés au moyen d'un dispositif pour l'assemblage de la figure 1 et d'un bras de support sur lequel est assemblé un des tronçons assemblés au moyen d'un dispositif pour l'assemblage de la figure 1.

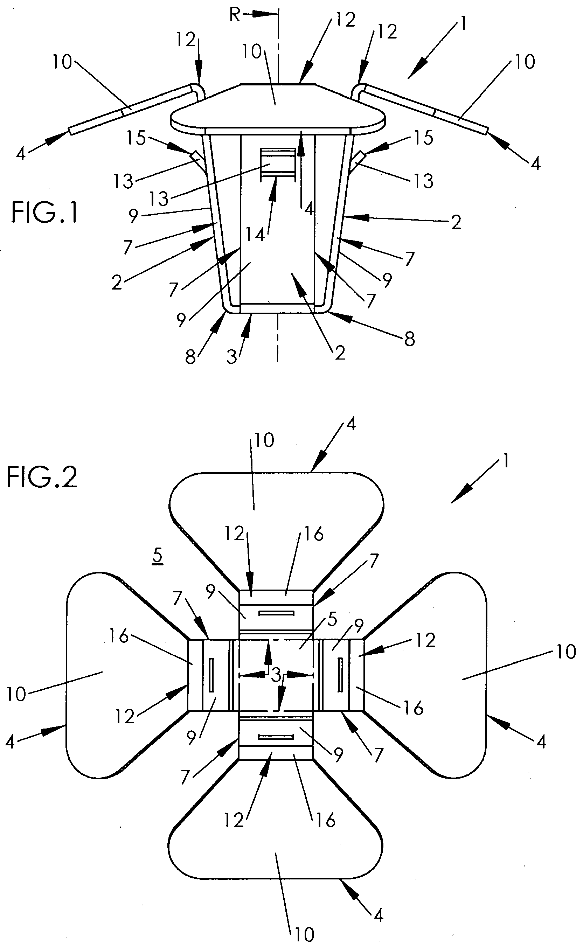

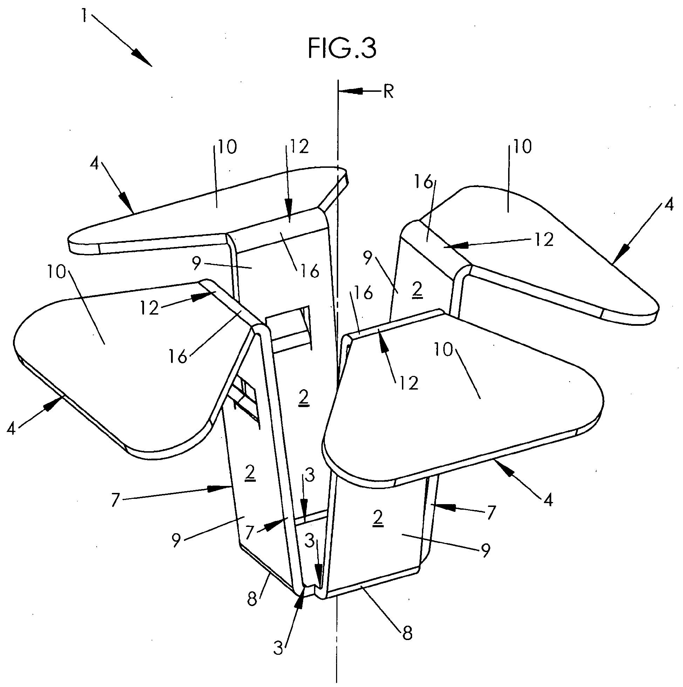

Sur les figures 1 à 4 est représenté un dispositif 1 pour l'assemblage de deux éléments, obtenu par découpage et pliage d'une plaque. Le dispositif 1 est de préférence en métal, tel qu'en acier ou en aluminium, mais peut être formé à partir d'un autre matériau et notamment en plastique.

Le dispositif 1 comprend au moins deux bras 2 élastiques.

Par « élastique », on désigne ici la propriété d'un matériau à se déformer sous l'action d'une contrainte et à reprendre sa forme initiale en absence de contraintes. En l'occurrence, ici, la déformation peut être obtenue manuellement par un opérateur.

Chaque bras 2 s'étend entre un bord 3 inférieur et un bord 4 libre, les bras 2 se rejoignant par leur bord 3 inférieur. Plus précisément, le bord 3 inférieur de chaque bras 2 est solidaire d'une base 5.

Selon le mode de réalisation préféré, le dispositif **1** comprend quatre bras **2,** de sorte que la base **5** est avantageusement de forme carrée, étant entendu que la forme de la base **5** sera adaptée au nombre de bras **2.**

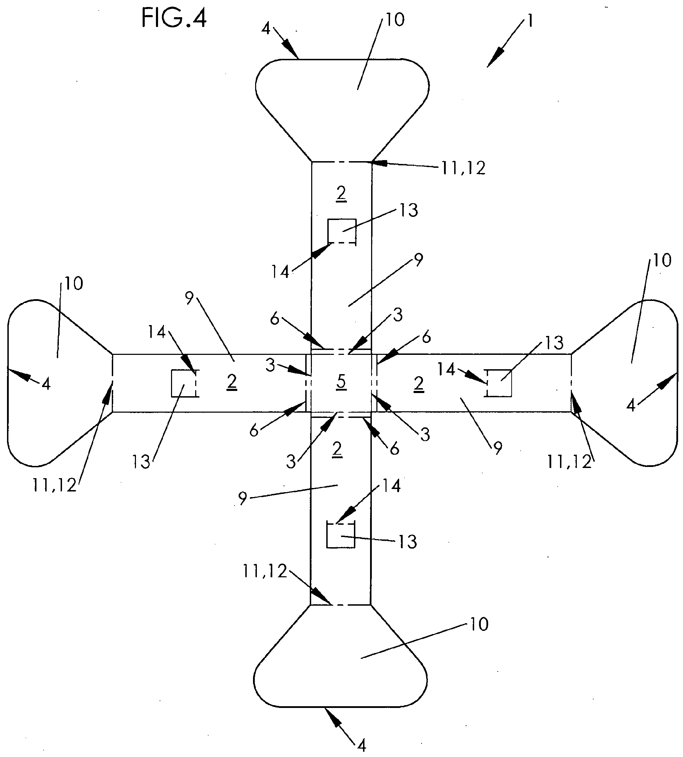

A partir de la plaque découpée, les bras **2** sont repliés autour d'un axe R de référence, sensiblement perpendiculaire à la base **5.** A cet effet, on forme une première ligne **6** de pliage, représentée en traits discontinus sur la figure 4, sur chaque bras **2.** Plus précisément, la première ligne **6** de pliage sur un bras **2** ne correspond pas au bord **3** inférieur du bras **2,** mais est décalée sur le bras **2.** Dès lors, lorsque chaque bras **2** est plié selon la première ligne **6** de pliage, les bords **7** latéraux des bras **2** ne rentrent pas en contact, de manière à conserver un écart entre deux bords **7** latéraux adjacents de deux bras **2** successifs. Les bras **2** du dispositif **1** sont ainsi disposés en pétale autour de l'axe R de référence.

Conséquemment au pliage du bras **2** selon la première ligne **6** de pliage, un congé 8 de raccordement est alors formé sensiblement à la jonction entre le bras **2** et la base **5.**

Dans la suite de la description, l'adjectif « axial » désigne toute direction parallèle à l'axe R de référence, l'adjectif « radial » désignant toute direction perpendiculaire à l'axe R de référence.

Chaque bras **2** comprend une portion **9** de corps et une portion **10** de tête, délimitées l'une de l'autre par une deuxième ligne **11** de pliage, représentée en traits discontinus sur la figure 4, sur le bras **2.**

La portion **9** de corps s'étend depuis le bord **3** inférieur jusqu'à un bord **12** supérieur correspondant sensiblement à la deuxième ligne **11** de pliage, et présente une extension axiale.

L'extension dans une direction indique ici que la dimension suivant ladite direction n'est pas nulle.

Une patte **13** élastique est formée sur la portion **9** de corps, entre la première ligne **6** de pliage et la deuxième ligne **11** de pliage. La patte **13** comprend ainsi une extrémité **14** solidaire de la portion **9** de corps et une extrémité **15** libre à distance de la portion **9** de corps, l'extrémité **15** libre étant dirigée vers la deuxième ligne **11** de pliage, c'est-à-dire vers le bord **12** supérieur.

Selon le mode de réalisation préféré, chaque patte **13** est obtenue par découpage et emboutissage d'une portion **9** de corps.

Selon une variante de réalisation, non représentée, chaque portion **9** de corps comprend deux pattes **13,** obtenues par pliage le long des bords **7** latéraux du bras **2.** Plus précisément, le long de chaque bord **7** latéral, la patte **13** comprend une extrémité mince rattachée à la portion **9** de corps, une extrémité plus large libre, et un bord latéral rattaché à la portion **9** de corps.

La portion **10** de tête s'étend depuis le bord **12** supérieur jusqu'au bord **4** libre, et est inclinée par rapport à la portion **9** de corps par pliage le long de la deuxième ligne **11** de pliage, à l'opposé de l'axe R de référence, de manière à présenter une extension radiale. Avantageusement, la portion **10** de tête est de plus inclinée vers le bord **3** inférieur, de manière à présenter également une extension axiale.

Conséquemment au pliage du bras **2** selon la deuxième ligne **11** de pliage, un congé **16** de raccordement se forme à la jonction entre la portion **10** de tête et la portion 9 de corps.

Selon le mode de réalisation préféré, la dimension de la portion **10** de tête mesurée le long du bord **12** supérieur est inférieure à la dimension mesurée le long du bord **4** libre, de sorte que la portion **10** de tête présente une forme évasée s'élargissant vers le bord **4** libre.

Le dispositif **1** ainsi formé peut se déformer notamment grâce aux congés **8, 16** de raccordement. Plus précisément, l'inclinaison de chaque bras **2** par rapport à l'axe R de référence varie par déformation du congé **8** de raccordement entre le bras **2** et la base **5,** tandis que l'inclinaison de la portion **10** de tête par rapport à la portion **9** de corps varie par déformation du congé **16** de raccordement entre la portion **10** de tête et la portion **9** de bras.

En pratique, en absence de contraintes, la portion **9** de corps est inclinée d'un angle compris par exemple entre 2 et 10°, et de préférence d'un angle de 5°, par rapport à l'axe R de référence, la portion **10** de tête étant inclinée d'un angle compris par exemple entre 60° et 80°, et de préférence d'un angle de 70°, par rapport à la portion **9** de corps.

Le dispositif **1** permet ainsi d'assembler deux éléments de type plaque, et trouvera une application particulière dans le domaine des chemins de câbles, au moins un des deux éléments étant un tronçon de chemins de câbles.

Selon un premier exemple, un élément est un tronçon **17** de chemins de câbles et le deuxième élément est un bras **18** de support pour chemins de câbles.

Le tronçon **17** de chemin de câbles est de type tôle perforée. Il est obtenu par pliage d'une tôle métallique, et présente une section en U formée par un fond **19** et deux ailes **20** sensiblement perpendiculaires au fond **19.** Le bord **21** libre des ailes peut être roulé pour éviter que les bords bruts ne blessent les câbles ou un opérateur. Des perforations **22** sont réparties régulièrement sur le fond **19** et sur les ailes **20** du tronçon **17.**

Le bras **18** de support se présente sous la forme d'un profilé et comprend une paroi **23** supérieure sensiblement plane, munie de perforations **24.** Selon le mode de réalisation des figures, le bras **18** de support comprend une deuxième paroi **25** sensiblement plane, formant angle sensiblement droit avec la paroi **23** supérieure. La deuxième paroi **25** permet par exemple la fixation du bras **2** sur un pendard ou une paroi.

Selon le mode de réalisation préféré, les perforations **22** du tronçon et les perforations **24** du bras sont de forme oblongue suivant la direction longitudinale de l'élément qui les porte. Cependant, les perforations pourront être de toute forme, par exemple de forme carrée, sans que la mise en oeuvre du dispositif **1** ne s'en trouve gênée.

L'assemblage du tronçon **17** sur le bras **18** de support au moyen du dispositif **1** se fait de la manière suivante.

Le tronçon **17** est posé sur la paroi **23** supérieure du bras **2.** Par exemple, comme illustré, le fond **19** du tronçon **17** est posé sur la paroi **23** supérieure du bras **2.** Au moins une perforation **24** du bras **18** de support est mise en coïncidence avec une perforation **22** du tronçon **17.** Selon le mode de réalisation préféré, le tronçon **17** est positionné sur le bras **2** de telle sorte que les perforations **24** oblongues du bras **18** de support croisent à angle droit les perforations **22** oblongues du tronçon **17.** Ainsi, au moins une perforation **24** du bras **18** de support coïncide-telle partiellement avec une perforation **22** du tronçon **17,** définissant une ouverture **26** carrée.

Les dimensions du dispositif **1** sont choisies de manière adaptée aux éléments à assembler. En l'occurrence ici, selon le mode de réalisation préféré, la distance radiale entre deux bras **2** du dispositif **1** en vis-à-vis, mesurée entre leur bord **12** supérieur, est supérieure aux dimensions de l'ouverture **26** carrée.

En outre, sur chaque bras **2,** la distance axiale au repos entre l'extrémité **15** libre des pattes **13** et le bord **4** libre de la portion **10** de tête est inférieure à la somme des épaisseurs du fond **19** du tronçon et de la paroi **23** supérieure du bras **18** de support.

Le dispositif 1 est alors inséré dans l'ouverture **26** carrée. Plus précisément, la portion **9** de corps des bras **8** est insérée dans l'ouverture **26** carrée par déformation autour du congé **8** de raccordement entre le bras **2** et la base **5,** et par déformation des pattes **13** dont l'extrémité libre **15** se rabat contre la portion **9** de corps. La déformation des pattes **13** est facilitée par le sens d'insertion du dispositif **1** et par l'orientation des pattes **13.**

La portion **9** de corps est insérée jusqu'à ce que la portion **10** de tête soit en appui sur le fond **19** du tronçon **17.** Plus précisément, le bord **4** libre de chaque bras **2** vient en contact avec le fond **19** du tronçon **17.** En forçant l'insertion, la portion **10** de tête s'écrase sur le fond **19** du tronçon par déformation autour du congé **16** de raccordement entre la portion **10** de tête et la portion **9** de corps, pour que les pattes **13** émergent des perforations **22, 24.**

Une fois que les pattes **13** émergent des perforations **22, 24,** elles tendent à reprendre leur position initiale dans laquelle leur extrémité **15** libre est à distance de la portion **9** de corps.

Ainsi, en relâchant l'insertion, la portion **10** de tête, en cherchant à reprendre sa position initiale, tend à faire sortir la portion **9** de corps de l'ouverture **26** carrée définie par les perforations **22, 24.** Les pattes **13** en saillie viennent en butée sous la paroi **23** supérieure, bloquant la sortie de la portion **9** de corps. Le fond **19** du tronçon et la paroi **23** supérieure du bras **2** sont alors bloqués axialement entre l'extrémité **15** libre des pattes **13** et la portion **10** de tête.

En outre, la portion **9** de corps tendant également à reprendre sa position initiale en s'écartant de l'axe R de référence, les bras **2** du dispositif **1** prennent appui sur le contour de l'ouverture **26** carrée définie par le croisement des perforations **22, 24** oblongues, de sorte que le tronçon **17** et le bras **2** de support sont également bloqués radialement.

La forme avantageusement évasée de la portion **10** de tête assure que la portion **10** de tête prenne appui sur le fond **19** du tronçon **17,** de part et d'autre des perforations **22** oblongues du tronçon **17.**

Selon le mode de réalisation préféré, dans la configuration dans laquelle l'ouverture **26** carrée est définie par le croisement de deux perforations **22, 24** oblongues, seules deux pattes **13** de la portion **9** de corps, à savoir deux pattes **13** de deux bras **2** du dispositif **1** en vis-à-vis, viennent en appui sous la paroi **23** supérieure du bras **18** de support. Les deux autres pattes **13** se retrouvent en effet directement sous le fond **19** du tronçon **17,** dans la perforation **24** du bras **18** de support, et peuvent être en contact avec le fond **19** du tronçon ou à distance.

Toutefois, le contact des deux pattes **13** sous la paroi **23** supérieure du bras **18** de support est suffisant pour assurer le blocage du tronçon **17** sur le bras **18** de support. Si besoin, on pourra assembler le tronçon **17** sur le bras **18** de support au moyen d'autant de dispositifs **1** pour l'assemblage que nécessaire.

On a ici décrit l'assemblage d'un tronçon **17** sur un bras **18** de support, étant entendu que le dispositif **1** peut être utilisé pour assembler tout type d'éléments, à condition que ces deux éléments présentent chacun une surface sensiblement plane pouvant être mises en contact l'une avec l'autre et munie d'au moins une perforation.

Ainsi, selon un deuxième exemple, le dispositif **1** peut également servir à assembler deux tronçons de chemin de câbles télescopiques munis de perforations oblongues dans la direction longitudinale des tronçons.

A cet effet, un premier tronçon **27** présente des dimensions supérieures à celles d'un deuxième tronçon **28,** de sorte que le deuxième tronçon **28** peut glisser sur le premier tronçon **27.** Chaque tronçon **27, 28** comprend un fond **29, 30,** des ailes **31, 32** et des perforations **33, 34** oblongues, de largeur sensiblement égale. La largeur interne du premier tronçon **27** est sensiblement égale à la largeur externe du deuxième tronçon **28.** Par largeur, on désigne ici la distance mesurée entre les ailes d'un tronçon.

Avantageusement, l'extrémité **35** des ailes **31** du premier tronçon **27** est roulée vers l'intérieur du tronçon **27,** de manière à former une boucle ouverte. Lorsque le fond **30** du deuxième tronçon **28** est en contact avec le fond **29** du premier tronçon **27,** les ailes **32** du deuxième tronçon **28** sont logées dans les boucles des ailes **31** du premier tronçon **27.** Ainsi, le deuxième tronçon **27** peut-il glisser sur le premier tronçon selon la direction longitudinale des tronçons **27, 28** grâce au guidage des ailes **32** du deuxième tronçon **28** dans les boucles des ailes **31** du premier tronçon **27.**

Les deux tronçons **27, 28** sont alors disposés par glissement l'un par rapport à l'autre pour obtenir la longueur de recouvrement souhaitée. On prendra soin de faire en sorte que le recouvrement des tronçons **27 28** fasse correspondre au moins une perforation **33** du premier tronçon **27** avec une perforation **34** du deuxième tronçon **28.**

Le dispositif **1** peut alors être utilisé de manière complémentaire à des moyens de verrouillage, non représentés, du glissement relatif des deux tronçons **27, 28** télescopiques.

En effet, le fond **30** du deuxième tronçon **28** présente un bord extrême qui peut être brut, car obtenu par exemple par découpage. Les moyens de verrouillage bloquent le glissement, mais peuvent laisser apparaître un jeu entre les fonds **29, 30** des tronçons **27, 28.** Ainsi, le bord extrême brut du fond **30** du deuxième tronçon **30** peut se retrouver légèrement en saillie sur le fond **29** du premier tronçon **27,** et risquer de blesser les câbles s'étendant sur les fonds **27, 28.**

Une fois le glissement des deux tronçons **27, 28** bloqués, l'insertion du dispositif **1** dans les deux perforations **33, 34** correspondantes permet de plaquer le fond **29** du premier tronçon **27** contre le fond **30** du deuxième tronçon **28.** Le bord extrême brut du fond **30** du deuxième tronçon **28** est alors au plus près du fond **29** du premier tronçon **27,** ou, en d'autres termes, les fonds **29, 30** des premier et deuxième tronçons **29, 30** sont en contact intime, limitant les risques de blessures sur les câbles sur le bord brut.

Le glissement relatif des deux tronçons **27, 28** peut également être bloqué uniquement grâce au dispositif **1** d'assemblage inséré dans les perforations **33, 34** correspondantes.

Selon le mode de réalisation préféré, de même que précédemment, seules deux pattes **13** sur deux bras **2** du dispositif **1** en vis-à-vis sont en appui sous le fond **29** du premier tronçon **27,** fournissant un blocage suffisant des deux tronçons **27, 28.**

Dans le cas où les perforations **33, 34** sont oblongues, seuls deux bras **2** du dispositif **1** pourront être en appui sur les contours des perforations **33, 34,** et plus précisément seules deux portions 9 de corps pourront être en appui sur la portion rectiligne des perforations **33, 34** oblongues.

De même que précédemment, plusieurs perforations **33, 34** oblongues sont mises en coïncidence et on pourra mettre en oeuvre autant de dispositifs **1** pour l'assemblage des deux tronçons **27, 28** que nécessaire pour obtenir un blocage suffisant.

Selon un troisième exemple, le dispositif **1** peut servir à assembler une cornière **36** de séparation sur le fond d'un tronçon, par exemple sur le fond **30** du deuxième tronçon **28.**

Une cornière **36** de séparation comprend généralement deux parois **37, 38** en L, une première paroi **37** étant en contact avec le fond **30** du tronçon **28,** la deuxième paroi **38** matérialisant la séparation à l'intérieur du tronçon **28.** La première paroi **37** est alors munie de perforations **39,** par exemple oblongues similaires aux perforations **34** sur le fond **30** du tronçon **28,** de manière à permettre son assemblage sur le fond **30** du tronçon **28** par le dispositif **1,** de manière analogue à l'assemblage des deux tronçons **27, 28** télescopiques décrit précédemment.

Bien que deux bras **2** du dispositif **1** suffisent à bloquer de manière satisfaisante deux éléments, le mode de réalisation préféré à quatre bras **2** présente notamment l'avantage de ne pas avoir de sens de montage, facilitant la manipulation du dispositif **1** par l'opérateur.

Dans le cas où les perforations oblongues définissent une ouverture **26** carrée, les quatre bras **2** du dispositif 1, et plus précisément la portion **9** de corps des quatre bras **2,** assurent le blocage dans deux directions radiales perpendiculaires.

La forme carrée définie par les quatre bras **2** du dispositif **1** empêche la rotation du dispositif **1** dans l'ouverture **26** carrée ou les perforations **33, 34, 39,** augmentant davantage l'effet de blocage radial.

Le dispositif **1** pour l'assemblage d'éléments permet d'assembler plusieurs types d'éléments, notamment dans le domaine des chemins de câbles, comme deux tronçons **27, 28** de chemins de câbles, un tronçon **17** de chemins de câbles sur son bras **18** de support et des accessoires sur un tronçon.

Le dispositif **1** pour l'assemblage se présente sous la forme d'une pièce unique, facile à fabriquer et pour un moindre coût, ne requérant ni outillage ni visserie supplémentaires.

La manipulation du dispositif **1** se fait par un unique opérateur, la déformation étant obtenue manuellement, rendant aisé l'assemblage de tout élément de type plaque.

## Revendications

1. Dispositif **(1)** pour l'assemblage de deux éléments, le dispositif (1) définissant un axe **(R)** de référence comprenant quatre bras (2) élastiques disposés en pétale, s'étendant depuis un bord **(3)** inférieur jusqu'à un bord **(4)** libre, les bras **(2)** étant jointifs par leur bord (3) inférieur, chaque bras **(2)** comprenant :
- une portion **(9)** de corps s'étendant depuis le bord **(3)** inférieur jusqu'à un bord **(12)** supérieur, présentant une extension axiale, et comportant une patte **(13)** élastique en saillie radiale vers la direction opposée de l'axe **(R)** de référence, cette patte **(13)** présentant une extrémité **(15)** libre dirigée vers le bord **(12)** supérieur du bras **(2),**
- une portion **(10)** de tête s'étendant depuis le bord **(12)** supérieur jusqu'au bord **(4)** libre et présentant une extension radiale vers la direction opposée de l'axe **(R)** de référence.

2. Dispositif **(1)** selon la revendication 1, dans lequel chaque portion **(10)** de tête est inclinée depuis le bord **(12)** supérieur vers le bord (3) inférieur.

3. Dispositif **(1)** selon la revendication 1 ou 2, dans lequel chaque patte **(13)** est formée par emboutissage de la portion **(9)** de corps d'un bras **(2).**

4. Dispositif **(1)** selon la revendication 1 ou 2, dans lequel chaque patte (13) est formée par pliage de la portion de corps d'un bras suivant un bord **(7)** latéral du bras **(2).**

5. Dispositif **(1)** selon l'une des revendications 1 à 4, dans lequel la dimension de la portion **(10)** de tête de chaque bras **(2),** mesurée suivant le bord **(12)** supérieur, est inférieure à la dimension mesurée suivant le bord **(4)** libre.

6. Dispositif **(1)** selon la revendication 5, dans lequel les bords (3) inférieurs des quatre bras **(2)** sont solidaires d'une base **(5)** carrée.

7. Chemin de câbles comprenant un tronçon **(17)** et un bras (18) de support munis chacun d'au moins une perforation **(22, 24),** la perforation **(22)** du tronçon **(17)** étant coïncidente avec la perforation **(24)** du bras **(18)** de support, le tronçon **(17)** étant assemblé sur le bras **(18)** de support au moyen d'un dispositif **(1)** selon l'une des revendications 1 à 6 inséré dans les perforations **(22, 24)** coïncidentes.

8. Chemin de câbles comprenant deux tronçons **(27, 28)** télescopiques, chaque tronçon **(27, 28)** étant muni d'au moins une perforation **(33, 34),** la perforation **(33)** d'un premier tronçon **(27)** étant coïncidente avec la perforation **(34)** du deuxième tronçon **(28),** le glissement relatif des tronçons **(27, 28)** étant bloqué au moyen d'un dispositif **(1)** selon l'une des revendications 1 à 6 inséré dans les perforations **(33, 34)** coïncidentes.

9. Chemin de câbles selon la revendication 7 ou 8, dans lequel les perforations **(22, 24, 33, 34)** sont de forme oblongue.

10. Chemin de câbles selon la revendication 7 ou 8, dans lequel les perforations **(22, 24, 33, 34)** sont de forme carrée.

## Patentansprüche

1. Vorrichtung (1) zum Zusammenbau von zwei Elementen, wobei die Vorrichtung (1) eine Bezugsachse (R) definiert, die vier blütenblattförmig angeordnete elastische Arme (2) enthält, die sich von einem unteren Rand (3) bis zu einem freien Rand (4) erstrecken, wobei die Arme (2) durch ihren unteren Rand (3) aneinandergesetzt sind, wobei jeder Arm (2) enthält:
- einen sich vom unteren Rand (3) bis zu einem oberen Rand (12) erstreckenden Körperabschnitt (9) mit einer axialen Ausdehnung und eine elastische Lasche (13) aufweisend, die radial in die Richtung entgegengesetzt zur Bezugsachse (R) vorsteht, wobei diese Lasche (13) ein zum oberen Rand (12) des Arms (2) gerichtetes freies Ende (15) aufweist,
- einen Kopfabschnitt (10), der sich vom oberen Rand (12) bis zum freien Rand (4) erstreckt und eine radiale Ausdehnung in die der Bezugsachse (R) entgegengesetzte Richtung aufweist.

2. Vorrichtung (1) nach Anspruch 1, wobei jeder Kopfabschnitt (10) vom oberen Rand (12) zum unteren Rand (3) geneigt ist.

3. Vorrichtung (1) nach Anspruch 1 oder 2, wobei jede Lasche (13) durch Tiefziehen des Körperabschnitts (9) eines Arms (2) geformt wird.

4. Vorrichtung (1) nach Anspruch 1 oder 2, wobei jede Lasche (13) durch Falten des Körperabschnitts eines Arms entlang eines Seitenrands (7) des Arms (2) geformt wird.

5. Vorrichtung (1) nach einem der Ansprüche 1 bis 4, wobei die Abmessung des Kopfabschnitts (10) jedes Arms (2), gemessen entlang des oberen Rands (12), kleiner als die gemessene Abmessung entlang des freien Rands (4) ist.

6. Vorrichtung (1) nach Anspruch 5, wobei die unteren Ränder (3) der vier Arme (2) fest mit einer quadratischen Basis (5) verbunden sind.

7. Kabelrinne, die einen Abschnitt (17) und einen Trägerarm (18) enthält, die je mit mindestens einer Durchbohrung (22, 24) versehen sind, wobei die Durchbohrung (22) des Abschnitts (17) mit der Durchbohrung (24) des Trägerarms (18) übereinstimmt, wobei der Abschnitt (17) auf den Trägerarm (18) mittels einer Vorrichtung (1) nach einem der Ansprüche 1 bis 6 montiert wird, die in die übereinstimmenden Durchbohrungen (22, 24) eingeführt wird.

8. Kabelrinne, die zwei teleskopische Abschnitte (27, 28) enthält, wobei jeder Abschnitt (27, 28) mit mindestens einer Durchbohrung (33, 34) versehen ist, wobei die Durchbohrung (33) eines ersten Abschnitts (27) mit der Durchbohrung (34) des zweiten Abschnitts (28) übereinstimmt, wobei das relative Gleiten der Abschnitte (27, 28) mittels einer Vorrichtung (1) nach einem der Ansprüche 1 bis 6 blockiert wird, die in die übereinstimmenden Durchbohrungen (33, 34) eingeführt ist.

9. Kabelrinne nach Anspruch 7 oder 8, wobei die Durchbohrungen (22, 24, 33, 34) eine längliche Form haben.

10. Kabelrinne nach Anspruch 7 oder 8, wobei die Durchbohrungen (22, 24, 33, 34) eine quadratische Form haben.

## Claims

1. Device (1) for fitting together two elements, the device (1) defining a reference axis (R) comprising four elastic arms (2) arranged in a petal configuration, extending from a lower edge (3) to a free edge (4), the arms (2) being joined at their lower edge (3), each arm (2) comprising:
- a body portion (9) extending from the lower edge (3) to an upper edge (12), having an axial extent, and comprising an elastic tab (13) which projects radially away from the reference axis (R), this tab (13) having a free end (15) oriented towards the upper edge (12) of the arm (2),
- a head portion (10) extending from the upper edge (12) to the free edge (4) and extending radially away from the reference axis (R).

2. Device (1) according to Claim 1, in which each head portion (10) is inclined from the upper edge (12) towards the lower edge (3).

3. Device (1) according to Claim 1 or 2, in which each tab (13) is formed by swaging the body portion (9) of an arm (2).

4. Device (1) according to Claim 1 or 2, in which each tab (13) is formed by bending the body portion of an arm along a lateral edge (7) of the arm (2).

5. Device (1) according to one of Claims 1 to 4, in which the dimension of the head portion (10) of each arm (2), measured along the upper edge (12), is smaller than the dimension measured along the free edge (4).

6. Device (1) according to Claim 5, in which the lower edges (3) of the four arms (2) are secured to a square base (5).

7. Cable tray comprising one section (17) and one support arm (18), each provided with at least one perforation (22, 24), the perforation (22) of the section (17) being aligned with the perforation (24) of the support arm (18), the section (17) being fitted onto the support arm (18) by means of a device (1) according to one of Claims 1 to 6 inserted into the aligned perforations (22, 24).

8. Cable tray comprising two telescopic sections (27, 28), each section (27, 28) being provided with at least one perforation (33, 34), the perforation (33) of a first section (27) being aligned with the perforation (34) of the second section (28), the sections (27, 28) being prevented from sliding relative to one another by means of a device (1) according to one of Claims 1 to 6 inserted into the aligned perforations (33, 34).

9. Cable tray according to Claim 7 or 8, in which the perforations (22, 24, 33, 34) are oblong.

10. Cable tray according to Claim 7 or 8, in which the perforations (22, 24, 33, 34) are square.
